# EUROPÄISCHE PATENTSCHRIFT

(11) **EP 2 930 776 B1**
(45) Veröffentlichungstag und Bekanntmachung des Hinweises auf die Patenterteilung: **25.01.2017**
(21) Anmeldenummer: 15162953.2
(22) Anmeldetag: 09.04.2015
(51) Int. Cl.: H01M 8/18, H01M 8/20, H01M 4/86, H01M 8/0247, H01M 8/0213, H01M 8/0234

(54) **GALVANISCHE ZELLE UND REDOX-FLOW-ZELLE**
GALVANIC CELL AND REDOX FLOW CELL
CELLULE GALVANIQUE ET CELLULE À FLUX REDOX

(30) Priorität: 10.04.2014 DE 102014005252
(43) Veröffentlichungstag der Anmeldung: 14.10.2015
(73) Patentinhaber: Bohe, Hans-Jürgen, 88090 Immenstaad (DE)
(72) Erfinder: Bohe, Hans-Jürgen, 88090 Immenstaad (DE)
(74) Vertreter: Otten, Roth, Dobler & Partner mbB Patentanwälte

(56) Entgegenhaltungen:
- DE-A1-102009 035 314

## Beschreibung

Die Erfindung betrifft eine galvanische Zelle, um eine Redoxreaktion für eine Redox-Flow-Zelle ablaufen zu lassen, nach dem Oberbegriff des Anspruchs 1 sowie eine Redox-Flow-Zelle nach dem Oberbegriff des Anspruchs 14.

Aus dem Stand der Technik sind Redox-Flow-Batterien bekannt, bei denen herkömmlicherweise die Elektroden plattenförmig ausgebildet sind und die Platten im Wesentlichen parallel zueinander angeordnet werden. Eine andere Anordnung der Elektroden ist beispielsweise aus der DE 10 2007 034 700 A1 bekannt: Bei einer derartigen Redox-Flow-Zelle sind die Elektroden innen und außen um ein Hohlprofil herum angeordnet, wobei das Hohlprofil wiederum als Membran zum Durchlass positiv geladener Ionen dient. Die Elektroden besitzen bei dieser herkömmlichen Redox-Flow-Zelle also eine tubuläre Form.

Aus der DE 10 2009 035 314 A1 ist eine tubuläre Redox-Flow-Zelle bekannt, wobei zwischen den Teilelektroden Borsten und ein textiles Element angeordnet sind.

Aufgabe der Erfindung ist es, galvanische Zellen für Redox-Flow-Zellen beziehungsweise Redox-Flow-Batterien einfacher und präziser fertigen zu können.

Die Aufgabe wird, ausgehend von einer galvanischen Zelle beziehungsweise einer Redox-Flow-Zelle, durch die kennzeichnenden Merkmale der Ansprüche 1 beziehungsweise 14 gelöst.

Durch die in abhängigen Ansprüchen genannten Maßnahmen sind vorteilhafte Ausführungen und Weiterbildungen der Erfindung möglich.

Eine Redox-Flow-Zelle bzw. Redox-Flow-Batterie ist im Grunde eine besondere Form eines Akkumulators, sie ist also wiederaufladbar. Im Unterschied zur Batterie ist nicht eine einzige Zelle vorhanden, die als Ort der Energiespeicherung und Energieumwandlung dient, sondern bei der Redox-Flow-Zelle kann die Energieumwandlung allein in der dafür vorgesehenen galvanischen Zelle erfolgen. Die Energie wird in den jeweiligen Elektrolyten gespeichert, die durch die jeweiligen Halbzellen der galvanischen Zelle gepumpt werden. Der Elektrolyt selbst kann in einem gesonderten Vorratstank bevorratet sein. Der Vorteil dieser Redox-Flow-Batterien besteht also auch darin, dass über die Tankgröße zur Bevorratung der Elektrolyten auch eine beliebige Skalierbarkeit ermöglicht wird. Die galvanische Zelle als Ort der Energieumwandlung kann genauso eigens dimensioniert werden wie die Größe des Tanks zur Bevorratung der beiden Elektrolyten.

Die chemische Reaktion, der Redoxprozess, umfasst eine Reduktion und eine Oxidation, welche wiederum an den Elektroden der jeweiligen Halbzelle ablaufen. Bei der Oxidation gibt das sogenannte Reduktionsmittel Elektronen ab, während umgekehrt bei der Reduktion ein Oxidationsmittel Elektronen aufnimmt. Diese Vorgänge finden an den Elektroden statt. Entsprechend kann zwischen den beiden Elektroden eine Spannung abgegriffen werden. Um den Stromkreis zu schließen, fließen im Gegenzug zwischen den beiden Halbzellen positiv geladene Ionen, die durch die Membran, welche die beiden Halbzellen voneinander trennt, hindurchtreten können. Im belasteten Zustand wird also ein Verbraucher zwischen die beiden Elektroden geschaltet, der sodann von einem Strom durchflossen wird, da zwischen den Elektroden der Zelle eine Spannung anliegt. Die Membran wiederum verhindert, dass die beiden Elektrolyten, die durch die Halbzellen hindurchgeleitet werden, sich miteinander vermischen.

Bei den Elektrolyten handelt es sich in der Regel um eine Salzlösung.

Die erfindungsgemäße galvanische Zelle dient dazu, eine derartige Redoxreaktion in einer Redox-Flow-Zelle ablaufen zu lassen. Sie umfasst eine erste und eine zweite Halbzelle, um dort jeweils die Reduktion beziehungsweise die Oxidation ablaufen zu lassen. Jede der beiden Halbzellen umfasst jeweils eine Elektrode als Anode beziehungsweise Kathode zum Ablauf der Reduktion und Oxidation und zur Leitung der Elektronen. Jede der beiden Elektroden wiederum umfasst eine feste Teilelektrode aus einem Festkörper, wobei wenigstens eine der beiden festen Teilelektroden als röhrenartige Hohlstruktur ausgebildet ist, deren Innenquerschnittsfläche senkrecht zur Längsachse der Hohlstruktur verläuft und im Inneren der Hohlstruktur liegt. Diese als Hohlstruktur ausgebildete feste Teilelektrode umschließt die jeweils andere feste Teilelektrode entlang der Längsausrichtung wenigstens teilweise. Die beiden festen Teilelektroden überlappen sich also wenigstens teilweise entlang ihrer Längsausrichtung.

Die erfindungsgemäße galvanische Zelle zeichnet sich nun dadurch aus, dass zu jeder festen Teilelektrode ein weicher Spacer aus einem flexiblen weichen Material vorgesehen ist, der zwischen den sich überlappenden festen Teilelektroden angeordnet ist. Die beiden festen Teilelektroden umfassen dabei wenigstens eines der beiden folgenden Merkmale:
- die Innenquerschnittsfläche der als Hohlstruktur ausgebildeten festen Teilelektrode verändert sich entlang der Länge der Hohlstruktur monoton in ihrer Größe und/oder
- die andere der beiden festen Teilelektroden ist so ausgebildet, dass sich die von der Außenkontur der Teilelektrode begrenzte Querschnittsfläche, die senkrecht zur Längsachse verläuft, monoton entlang der Längsachse in ihrer Größe verändert. Somit wird entweder der Innenquerschnitt der umschließenden, als Hohlstruktur ausgebildeten Teilelektrode in einer Richtung immer enger oder die innen liegende feste Teilelektrode wird immer breiter. Optional können aber auch beide Merkmale sind gleichzeitig vorgesehen sein.

Werden die beiden festen Teilelektroden bei der Fertigung der galvanischen Zelle also in Längsrichtung gegeneinander verschoben, so ändert sich der Abstand, den ihre Oberflächen zueinander aufweisen. Die beiden weichen Spacer zwischen den beiden Elektroden ermöglichen eine derartige Einstellmöglichkeit, da sie aus einem flexiblen Material ausgebildet sind. Das bedeutet, dass bei einer entsprechenden Druck- oder Krafteinwirkung das flexible Material seine Form ändern kann. Das flexible Material kann grundsätzlich plastisch, insbesondere aber auch elastisch ausgebildet sein. Ein elastisches Material ist dann vorhanden, wenn beim Nachlassen der Krafteinwirkung sich der verformte Gegenstand wieder in seinen Ursprungszustand zurückverformt. Eine monotone Änderung bedeutet, dass entlang der Längsachse der entsprechende Querschnitt sich nur vergrößert oder nur verkleinert, wobei er auch über eine gewisse Teilstrecke hinweg konstant bleiben kann.

Auf diese Weise wird ermöglicht, dass der Abstand zwischen den festen Teilelektroden einstellbar ist. Somit können die optimalen Parameter zum Ablauf der Redoxreaktion eingestellt werden. Nach dem bisherigen Stand der Technik war dies im Falle von als Hohlstrukturen beziehungsweise Röhren ausgebildeten Elektroden bislang nicht möglich. Bei plattenförmigen Elektroden wiederum ist grundsätzlich zwar eine Änderung des Abstandes durch Verschieben der Platten möglich; dieses Verschieben erfordert allerdings mitunter einen hohen technischen Aufwand. Zudem ist zu berücksichtigen, dass die plattenförmigen Elektroden auch über ihre gesamte Fläche hin sehr stabil gehalten werden müssen, damit der Abstand auch bei den weiteren Fertigungsschritten konstant beibehalten wird, bis die Platten fest eingebaut sind. Oftmals werden die galvanischen Zellen während des Fertigungsprozesses getestet; dies kann bei der erfindungsgemäßen galvanischen Zelle wesentlich genauer vonstatten gehen als bei den bisher üblichen Zellen. Gerade bei plattenförmigen Elektroden muss die Elektrolytflüssigkeit zwischen den Platten hindurch geleitet werden und dennoch sich einigermaßen homogen zwischen ihnen verteilen, während die Messungen laufen und die Elektroden zur Justage verschoben werden. Diese Testmessungen können wesentlich einfacher bei den gegeneinander zu verschiebenden Teilelektroden gemäß der Erfindung durchgeführt werden.

Bei einer Ausführungsform der Erfindung ist die andere, nicht als Hohlstruktur ausgebildete feste Teilelektrode wenigstens teilweise als Vollkörper ausgebildet. Diese Ausbildung als Vollkörper einfacher gefertigt werden. Die festen Teilelektroden, sei es eine Hohlstruktur oder ein Vollkörper, können im Querschnitt senkrecht zur Längsachse verschiedene Konturformen aufweisen, beispielsweise ein Polygon, eine Ellipse oder ein Kreis.

Eine geometrisch sehr einfache Variante ist ein kreisförmiger Querschnitt. Dementsprechend besitzt bei dieser Ausführungsform die Innenfläche in der Hohlstruktur oder die Außenfläche der anderen, nicht als Hohlstruktur ausgebildeten Teilelektrode die Form eines Kegels oder eines Kegelstumpfes. Eine Konturform als Kreis, die also kegelförmige Oberflächen der Elektroden zur Folge hat, besitzt den Vorteil, dass die Annäherung der Oberflächen beim Justieren gleichmäßig um die Längsachse herum erfolgen kann, d.h., sofern die Kegelform die gleiche Steigung zur Längsachse besitzt, unterscheiden sich die Abstände der Oberflächen an verschiedenen Stellen nicht. Dies vereinfacht im Übrigen auch die Justage der Zelle.

Die Änderung der Innenquerschnittsfläche beziehungsweise der Außenkontur kann insbesondere streng monoton erfolgen, d.h. es existieren keine Abschnitte entlang der Länge, in denen der Querschnitt hinsichtlich seiner Größe gleich bleibt.

Denkbar ist bei einer Ausführungsform der Erfindung insbesondere, dass die Querschnittsfläche linear oder quadratisch mit der Länge ansteigt. Um radial zur Längsachse die gleichen Abstände vorsehen zu können, können insbesondere die Teilelektroden in Bezug auf ihre Mittenachsen, die entlang der Länge der Teilelektroden verlaufen, koaxial zueinander angeordnet sein. Auch hierdurch wird die Fertigung in der Regel vereinfach. Zudem wird ermöglicht, dass eine rotationssymmetrische galvanische Zelle entstehen kann. Ferner können die festen Teilelektroden grundsätzlich gegeneinander am weitesten verschoben werden, wenn sie koaxial zueinander angeordnet sind. Wenn die Innenfläche beziehungsweise die äußere Mantelfläche der jeweiligen Teilelektrode gegenüber der Längsachse geneigt sind, ist es aus Platzgründen vorteilhaft, beide Teilelektroden so anzuordnen, dass in der gleichen Richtung entlang ihrer Länge die Innenquerschnittsfläche der einen der beiden Teilelektroden zunimmt und die der anderen abnimmt. Somit kann eine platzsparende Unterbringung der beiden Elektroden ermöglicht werden. Es besteht überall ein gleicher Neigungswinkel und die beiden Elektroden können sehr genau gegeneinander positioniert werden. Beim gleichen Neigungswinkel zur Längsachse wird ermöglicht, dass die Innen- und Außenmantelflächen der jeweiligen Elektroden genau parallel zueinander angeordnet sind. Dies erleichtert insbesondere ein sehr präzises Einstellen der galvanischen Zelle.

Die äußere, als Hohlstruktur ausgebildete Teilelektrode kann bei einer Ausführungsvariante der Erfindung grundsätzlich auch zylindrisch aufgebaut sein. Sie besitzt sodann außen einen konstanten Kreisdurchmesser, der sich über die Länge nicht verändert. Nach außen hin ist die Hohlstruktur dann zylindrisch aufgebaut. Des Weiteren kann prinzipiell auch die innere Teilelektrode hinsichtlich ihres Außenmantels zylindrisch ausgebildet sein. Diese Außenkontur hängt insbesondere davon ab, ob eine Vielzahl einzelner galvanischer Zellen miteinander verschaltet werden sollen. Bei einer Ausführungsform der Erfindung bilden die einander zugewandten Seiten der festen Teilelektroden gegenüber der Orientierung der Längsachse jeweils einen konstanten Winkel und die beiden Winkel sind betragsgleich.

Beim Verschieben der beiden festen Teilelektroden können, wie bereits dargestellt, die Mantelflächen parallel zueinander geführt werden. Es herrschen sodann ähnliche Bedingungen für die chemische Reaktion an allen Stellen, da auch der Abstand der beiden Elektroden stets konstant bleibt. Als weicher Spacer kommt ein poröses Material in Betracht, durch das die Elektrolytflüssigkeit hindurchfließen kann. Der Spacer liegt an den Elektroden an und sorgt für einen konstant bleibenden Abstand zwischen ihnen. Der Spacer sorgt für einen konstanten Anpressdruck an jeder Stelle der Teilelektrode.

Der weiche Spacer kann zugleich auch als Teilelektrode ausgebildet sein, die darüber hinaus insbesondere mit der ihr zugeordneten festen Teilelektrode in elektrischem Kontakt steht. Hierdurch kann in vorteilhafter Weise auch die mit der Elektrolytflüssigkeit in Berührung kommende Oberfläche noch einmal deutlich erhöht werden. Besonders vorteilhaft ist bei einer Weiterbildung der Erfindung eine Kombination aus porösem oder mit Durchflusskanälen versetztem Material mit elektrischer Leitfähigkeit. Das weiche Material kann dazu aus einem graphitierten Vlies bestehen. Ein Vliesmaterial selbst ist oftmals ein elektrischer Nichtleiter. Ein grahitiertes Vlies wird mit Graphitpulver versehen und erlangt so seine elektrische Leitfähigkeit. Das leitende Vlies steht mit der entsprechenden festen Teilelektrode der Halbzelle in Kontakt. Das Vlies und insgesamt die porösen Materialien besitzen eine wesentlich vergrößerte Oberfläche gegenüber einfachen Festkörpern, die als Vollkörper ausgebildet sind, sodass insgesamt eine vergrößerte Oberfläche zum Ablauf der Reduktion beziehungsweise der Oxidation vorhanden ist.

Bei Ausführungsformen der Erfindung können die festen Teilelektroden insbesondere als Graphitkörper ausgebildet sein, wodurch vorteilhafterweise eine gute chemische Beständigkeit erzielt werden kann. Eine feste Teilelektrode und der entsprechende Spacer sind in einer Halbzelle angeordnet und stehen unmittelbar in Kontakt mit der festen Teilelektrode und dem Spacer der anderen Halbzelle. Stattdessen ist meistens ein Separator zur Trennung der ersten und zweiten Halbzelle vorgesehen, wobei der Separator dazu ausgebildet ist, einen Ionenaustausch zwischen den Halbzellen zu ermöglichen und wobei der Separator insbesondere als Membran ausgebildet ist. In vorteilhafter Weise verhindert der Separator ein Vermischen der Elektrolyte.

Die galvanischen Zellen gemäß der Erfindung können so zu einer Redox-Flow-Zelle verschaltet werden, dass jede der beiden Halbzellen vom Elektrolyten durchflossen wird, wobei der Elektrolyt aus einem Tank in die Halbzelle gepumpt und nach dem Durchfluss wieder zurück in den Tank gepumpt wird. Mindestens zwei galvanischen Zellen können über Parallel- oder Serienschaltung zu einer Redox-Flow-Batterie verschaltet werden.

Anstelle eines porösen Materials kann grundsätzlich jedes von Leitungskanälen durchzogenes Material verwendet werden, das entsprechend durchflossen werden kann.

### Ausführungsbeispiele:

Ausführungsbeispiele der Erfindung sind in den Zeichnungen dargestellt und werden nachstehend unter Angabe weiterer Einzelheiten und Vorteile näher erläutert.

Im Einzelnen zeigen:
- Figur 1: ein schematischer Schnitt durch eine galvanische Zelle gemäß der Erfindung,
- Figur 2: ein schematischer Schnitt durch eine Verschaltung von Einzelzellen gemäß der Erfindung,
- Figur 3: eine Schrägansicht auf eine Verschaltung von Einzelzellen gemäß der Erfindung,
- Figur 4: eine schematische Darstellung eines Batterieblocks gemäß der Erfindung,
- Figur 5: eine schematische Darstellung eines Batterieblocks mit versetzt angeordneten Einzelzellen gemäß der Erfindung, sowie
- Figur 6: eine schematische Prinzipdarstellung einer (allgemeinen) Redox-Flow-Zelle.

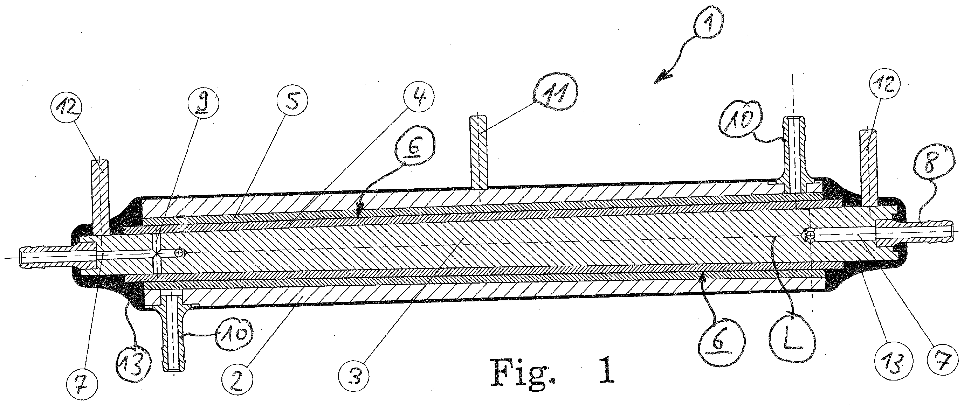

Figur 1 zeigt einen schematischen Schnitt durch eine galvanische Zelle 1 gemäß der Erfindung. Die galvanische Zelle 1 umfasst eine Außenelektrode 2 und eine Innenelektrode 3. Die Außenelektrode 2 ist im vorliegenden Fall ein zylindrischer Hohlkörper, der entlang seiner Längsachse L von einer kegelförmigen Bohrung durchsetzt wird. Die Innenquerschnittsfläche dieser Bohrung nimmt entlang der Längsachse L, in der Figur 1 von links nach rechts, streng monoton zu. Der Durchmesser der Querschnittsfläche steigt linear an. Bei der Innenelektrode 3 handelt es sich zunächst um einen Vollkörper, der in die kegelförmige Ausnehmung der Außenelektrode 2 eingebracht ist und diese vollständig durchsetzt. Außenelektrode 2 und Innenelektrode 3 sind hinsichtlich ihrer Längsachse L koaxial angeordnet. Die Innenelektrode 3 besitzt die Form eines Kegels beziehungsweise eines Kegelstumpfes.

Hinsichtlich ihres Durchmessers ist die Innenelektrode so ausgebildet, dass sie entsprechend in die Ausnehmung der Hohlstruktur der Außenelektrode 2 passt. Zudem ist die Kegelform der Innenelektrode 3 so gewählt, dass bei der vorliegenden Anordnung gemäß Figur 1 (gesehen von links nach rechts) die Steigung des Kegels gegenüber der Längsachse L im gleichen Maße zunimmt wie der Durchmesser der Innenquerschnittsfläche der Außenelektrode 2. Die Steigungen gegenüber der Längsachse L stimmen also bei beiden Kegelformen überein. Der Abstand zwischen der Manteloberfläche des Kegels der Innenelektrode 3 und des inneren Mantels der Hohlstruktur der Außenelektrode 2 ist daher im vorliegenden Fall konstant.

In diesem Zwischenraum befinden sich zwei graphitierte Vliese 4, 5, die untereinander durch einen Separator 6 getrennt sind. Die Außenelektrode 2 bildet zusammen mit dem graphitierten Vlies 5 die erste Halbzelle, während die Innenelektrode 3 zusammen mit dem graphitierten Vlies 4 die zweite Halbzelle bildet. Bei dem Separator 6 handelt es sich um eine Membran, die für Protonen durchlässig ist. Bei den Elektroden sind verschiedene Ausgestaltungen möglich. Es kann sich beispielsweise um Graphitelektroden handeln, die gegebenenfalls eine metallische Beschichtung aufweisen. Auch Metallelektroden mit einer Beschichtung sind denkbar. Bei Graphit- und Metallelektroden kann die Beschichtung auch mittels eines Flammsprühverfahrens aufgebracht werden. Die somit aufgebrachte Schicht muss entsprechend elektrisch leitend und auch dazu geeignet sein, das hindurchströmende Elektrolyt-Fluid gut leiten zu können. Der Neigungswinkel der kegelförmigen Aussparung der Außenelektrode 2 beziehungsweise des kegelförmigen Mantels der Innenelektrode können einen Winkel von 0,5° bis 10° zur Längsachse aufweisen. Bei der Außenelektrode 2 kann der Innendurchmesser der kegelförmigen Ausnehmung regelmäßig in der Größenordnung von 5 mm bis 50 mm (Millimeter) liegen. Je nach Dimensionierung der galvanischen Zelle beziehungsweise der Redox-Flow-Zelle sind jedoch auch Abweichungen davon möglich.

Die Vliese 4 und 5 sind zur Verbesserung der elektrischen Leitfähigkeit mit losem Graphitpulver bestreut. Sie bilden somit praktisch eine Erweiterung der jeweiligen Teilelektroden 2, 3 und stehen mit diesen elektrisch leitend in Kontakt. Zur eindeutigen Potentialtrennung kann das innere Vlies 4 länger ausgebildet sein als das äußere Vlies 5. Das graphitierte Vlies 4 beziehungsweise 5 vereint somit zwei Funktionen: Das graphitierte Vlies übernimmt zum einen die Funktion der Stromleitung und bildet den Ort, an dem die Redoxprozesse ablaufen, und dient zum anderen der Elektrolytleitung.

Bei den Elektrolyten handelt es sich um Fluide, in der Regel um Flüssigkeiten, gegebenenfalls auch um Gase. Zur Herstellung der Elektroden oder des elektrisch leitenden Vlieses ist ebenfalls nicht ausgeschlossen, dass anstelle von oder zusätzlich zu Graphit Aktivkohle eingesetzt wird. Beim Fertigungsprozess kann die Außenelektrode 2 gegenüber der Innenelektrode 3 verschoben werden. Dadurch ändert sich der Abstand zwischen den Oberflächen der beiden Bauteile. Zwischen der Außenelektrode 2 und der Innenelektrode 3 befinden sich zunächst eine Schicht Vlies 5, anschließend der Separator 6 und danach wieder eine Schicht Vlies 4.

Sind die Eigenschaften der Bauteile hinreichend bekannt, so kann bei der Fertigung auch der Anpressdruck genau bestimmt werden, der zu einer optimalen Justierung notwendig ist. Zusätzlich ist es möglich, bei der Fertigung selbst die galvanischen Zellen zu testen, in dem probeweise eine Elektrolytflüssigkeit hindurchgeleitet wird und die Spannung an den Elektroden abgegriffen und gemessen wird. Durch diese Kontrollverfahren kann eine sehr präzise Fertigung der galvanischen Zellen beziehungsweise eine entsprechende Optimierung erreicht werden.

Die Innenelektrode 3 umfasst eine Sacklochbohrung 7 als Einbeziehungsweise Auslauf für das Elektrolyt-Fluid. Gemäß Figur 1 sind die Sacklochbohrungen 7 kopf- beziehungsweise fußseitig und axial angebracht; sie verlaufen also genau auf der Längsachse. Die Sacklöcher 7 können zu besseren Montage eines Schlauchs mit einem Stutzen 8 versehen sein. Des Weiteren sind radiale Bohrungen 9 vorgesehen, sodass der Elektrolyt zum Beispiel aus der entsprechenden Sacklochbohrung 7 über die radialen Bohrungen 9 zum Vlies 4 fließen kann. Da es sich bei dem Vlies um ein poröses Material handelt, kann der Elektrolyt entsprechend durch das Vlies hindurchgeführt werden. In entsprechender Weise kann der Elektrolyt dann zur anderen Sacklochbohrung hin fließen, die als Auslass vorgesehen ist und auch dort über entsprechender radiale Bohrungen in den Auslass gelangen.

An der Außenelektrode 2 wiederum sind separate Zulaufstutzen 10 beziehungsweise Ablaufstutzen vorgesehen, sodass der Elektrolyt über einen der Stutzen 10 und eine Durchbohrung der Außenelektrode 2 zum Vlies 5 gelangen kann, durch das Vlies 5 hindurchströmt und auf der anderen Seite durch einen entsprechenden Stutzen 10 als Auslass wieder aus der galvanischen Zelle herausgeführt wird. Die Ein- und Auslässe 8, 10 sind jeweils so angeordnet, dass pro Halbzelle der Einlass an einem Ende des Vlieses angeordnet ist und der Auslass auf der gegenüberliegenden Seite des Vlieses. Der Elektrolyt kann somit durch das Vlies hindurchfließen und es vollständig durchsetzen. In Figur 1 sind die jeweiligen Ein- und Auslässe der Halbzelle daher immer auf der rechten beziehungsweise auf der linken Seite angeordnet.

Um eine Spannung abgreifen zu können, müssen mindestens zwei elektrische Kontakte vorgesehen sein, damit die Außenelektrode 2 und die Innenelektrode 3 kontaktiert werden können. Im vorliegenden Fall ist die Außenelektrode 2 über den Kontakt 11 kontaktiert. Währenddessen wird die Innenelektrode 3 über zwei Kontakte 12 kontaktiert, die an den jeweiligen Enden entlang der Längsrichtung L angeordnet sind. Bei der Innenelektrode 3 sind zwei Kontakte vorgesehen (Kontakt 12), damit eine bessere Stromableitung erfolgen kann. Es ist auch denkbar, dass die Außenelektrode 2 mit mindestens zwei Kontakten zur besseren Stromableitung versehen wird. Um die Stromableitung weiter verbessern zu können, können die Enden der Elektroden 11, 12 mit leitfähigen Material wie Silberdraht oder Kupferdraht umwickelt sein. Auch der Einsatz von Leitlack kann eingesetzt werden, um die elektrische Verbindung zur Außenelektrode 2 oder zur Innenelektrode 3 zu verbessern. Die Umwicklung kann grundsätzlich einfach oder mehrfach erfolgen. Des Weiteren kann die nach außen geführte jeweilige Elektrode teilweise oder vollflächig umwickelt sein.

Die gesamte galvanische Zelle ist nach außen hin versiegelt, um eine absolute chemische Beständigkeit gegen säurehaltige Inhaltsstoffe der Elektrolyten zu gewährleisten. Des Weiteren ist es vorteilhaft, wenn die Zelle frei von Leckagen ist. Aus diesem Grund ist eine Vergussmasse 13 zum Verguss der Zelle 1 vorgesehen. Als Vergussmasse kann beispielsweise ein Bisphenol-A-Epoxy-Vinyl-Esterharz eingesetzt werden. Ein derartiger Stoff wird beispielsweise unter dem Handelsnamen "Derakane Momentum 411-350" vertrieben. Dieses Material zeichnet sich durch eine besonders zuverlässige Abdichtung, insbesondere beim Einsatz nicht plattenförmiger Zellen aus.

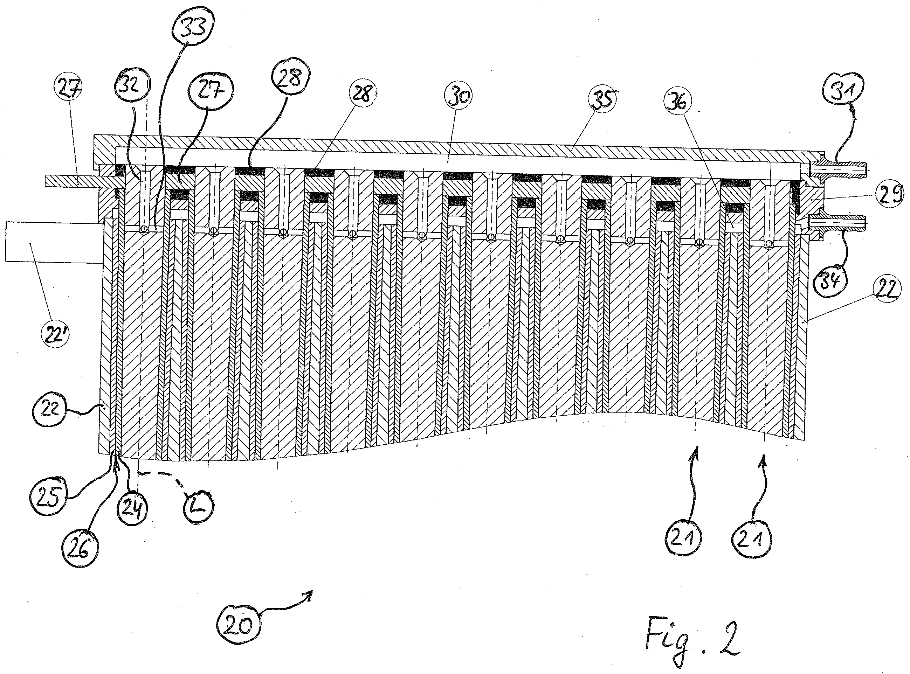

Figur 2 zeigt eine Verschaltung 20 mehrerer Einzelzellen 21. Bei der vorliegenden Schnittdarstellung sind die Einzellzellen 21 nebeneinander angeordnet. Den gesamten verschalteten Komplex 20 von Einzelzellen 21 umschließt die Außenelektrode 22. Seitlich gesehen entlang der Einzelzellen 21 ist ein Kontaktblech 22' angeordnet, dass mit der Außenelektrode 22 in leitender Verbindung steht. In einer Reihe angeordnet befinden sich die Innenelektroden 23, die jeweils mit einem graphitierten Vlies 24 in Verbindung stehen. Unmittelbar an die Außenelektrode 22 grenzt eine Schicht aus graphitiertem Vlies 25 an. Diese wiederum grenzt an einen Separator 26. Anschließend folgt das graphitierte Vlies 24 und die Innenelektrode 23. Das graphitierte Vlies 24 umgibt die kegelförmige Innenelektrode 23. Das gleichen umgibt wiederum das graphitierte Flies 24 der Separator 26, der wiederum vom graphitierten Flies 25 umgeben wird. Im Inneren der Verschaltung 20 grenzt sodann auch das graphitierte Flies 25 an die Außenelektrode 22 an, d.h. die Außenelektrode 22 kann gewissermaßen aus einem Festkörperblock bestehen, in den Bohrungen eingelassen sind. Diese Bohrungen werden sodann innen mit dem graphitierten Vlies 25, dem Separator 26, dem graphitierten Vlies 24 und der Innenelektrode 23 bestückt.

Im schematischen Schnitt der Figur 2 sind also Teile der Außenelektrode 22 als Zwischenbereiche zwischen den einzelnen Vliesschichten zu sehen. Die Innenelektroden 23 stehen untereinander ebenfalls in elektrisch leitender Verbindung. Dazu ist ein Anschluss 27 vorgesehen, der sich über die gesamte Verschaltung 20 von Einzelzelle zu Einzelzelle 21 erstreckt. Der Spannungsabgriff erfolgt also zwischen dem Kontaktblech 22' und dem Anschluss der Innenelektroden 27. Zur Abdichtung ist nach außen hin eine Vergussmasse 28 vorgesehen sowie nach außen hin eine Fassung 29. Die Fassung 29 dient der Trennung der inneren Halbzellen gegen die äußeren Halbzellen. Auch die Vergussmasse 28 trennt zum einen beide Halbzellen gegeneinander, dichtet sie ab und schützt gleichzeitig die elektrische Leitung (z.B. Anschluss 27) gegen chemische Einflüsse der Elektrolyte. Für die Verschaltung 20 der Einzelzellen 21 ist eine gemeinsame Zufuhr und Abfuhr des Elektrolyten zu bzw. von den Einzelzellen 21 weg vorgesehen. Zu diesem Zweck verläuft im Bereich der Abdeckung 35 ein Strömungskanal 30, für den ein Stutzen 31 vorgesehen ist. Dieser Strömungskanal 30 verläuft über alle Einzelzellen 21 hinweg und steht in Verbindung mit den Sacklochbohrungen 32, die in die Innenelektroden 23 hinein münden. Davon ausgehend verlaufen wiederum radiale Bohrungen 33 innerhalb der Innenelektroden 23, sodass der Elektrolyt zwischen dem Stutzen 31, dem Strömungskanal 30, der Sacklochbohrung 32, den radialen Bohrungen 33 und dem Vlies 24 strömen kann. Die Abdeckung 35 oberhalb des Strömungskanals 30 kann, wie im vorliegenden Ausführungsbeispiel, aufgeklebt sein.

Ferner ist in der Fassung 29 ein Stutzen 34 angeordnet, der unmittelbar einen Zugang zum Vlies 25 ermöglicht. Analog hierzu können zwei weitere Anschlüsse vorgesehen sein, beispielsweise auf der nicht dargestellten unteren Seite der Verschaltung 20, sodass ein Durchfluss der Elektrolyte durch die jeweiligen Halbzellen möglich ist. Um eine gute elektrische Stromableitung zu ermöglichen, kann das Kontaktblech 22' vollflächig mit der Außenelektrode 22 in Kontakt stehen.

Wie in Figur 2 dargestellt, sind die Innenelektroden 23 so ausgebildet, dass sie eine Kegelform aufweisen, deren Querschnittsfläche wie in der Darstellung von Figur 2 von oben nach unten abnimmt. Gleichzeitig besitzt die Außenelektrode 22 Bohrungen, in welche die Halbzellen eingebracht sind, deren Durchmesser, gesehen in Figur 2, von oben nach unten abnimmt. Die Geometrie der Einzelzellen in Figur 2 entspricht somit grundsätzlich der Geometrie der galvanischen Zelle aus Figur 1. Der Abstand zwischen den einzelnen Innenelektroden 23 und den jeweiligen Bereich der Außenelektrode 22 ist konstant, zumal die Steigung der Kegelformen gegenüber der Längsachse L immer gleich ist. Bei der Fertigung kann folglich durch Verschieben und Anpressen der Innenelektroden 23 gegenüber der Außenelektrode 22 eine genaue, präzise und optimierte Fertigung ermöglicht werden, bei der eine präzise Einstellung der Leistung bzw. des Wirkungsgrades möglich ist.

Für die äußeren Halbzellen ist ein gemeinsamer Strömungskanal 36 für alle Einzelzellen 21 zur Leitung des Elektrolyten vorhanden.

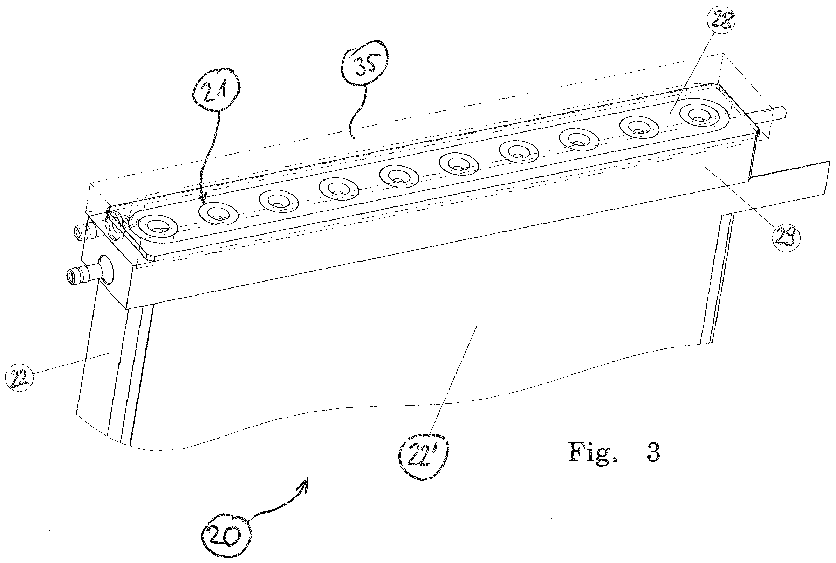

Figur 3 zeigt eine schematische Draufsicht der Verschaltung 20 der Einzelzellen 21. Die Einzelzellen 21 sind in einer Reihe angeordnet. Im oberen Bereich ist die Abdeckung 35 gestrichelt eingezeichnet. Darunter befindet sich die Fassung 29. In der Mitte der Fassung 29 umgibt die Vergussmasse 28 unmittelbar die Einzelzellen 21. Seitlich wird die Verschaltung begrenzt vom Kontaktblech 22'. Am vorderen Rand ist ein Teil der Außenelektrode 22 zu sehen, die elektrisch leitend mit dem Kontaktblech 22' verbunden ist. Die Einzelzellen 21 gemäß den Figuren 2 und 3 sind parallel geschaltet.

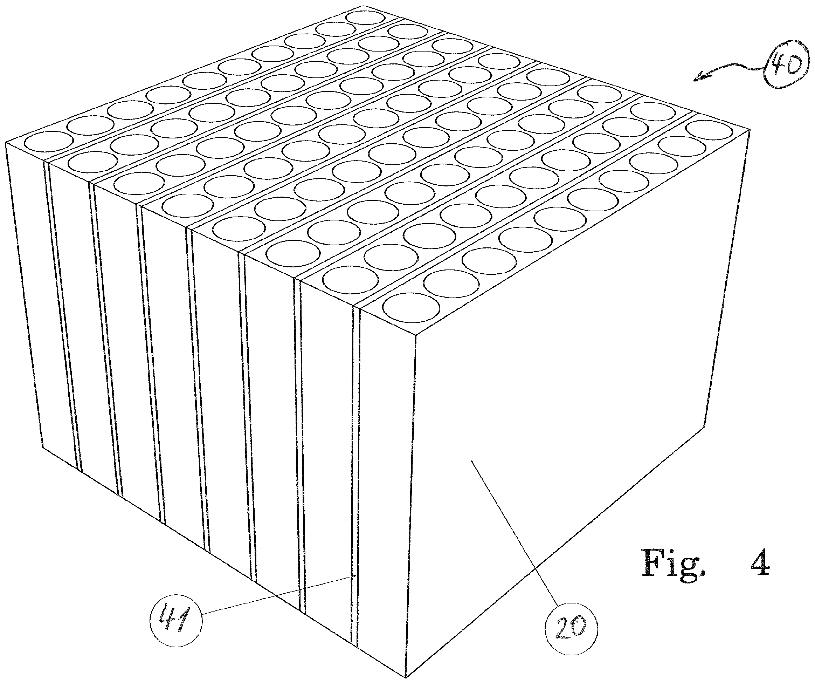

In Figur 4 sind eine Reihe von Verschaltungen 20 der Einzelzellen zu sehen, die zu einer Batterie 40 zusammengefügt werden. Zwischen den einzelnen Verschaltungen 20 sind Isolierplatten 41 zur elektrischen Isolierung der Kontaktbleche vorgesehen. Um eine gewisse Spannung, deren Wert über dem einer Einzelzelle liegt, zu erreichen, können Einzelzellen oder deren Verschaltungen in Serie geschaltet werden. Eine Parallelschaltung ermöglicht, dass ein höherer Stromfluss erreicht werden kann, da sich die Ströme aus den einzelnen parallel geschalteten Zweigen addieren.

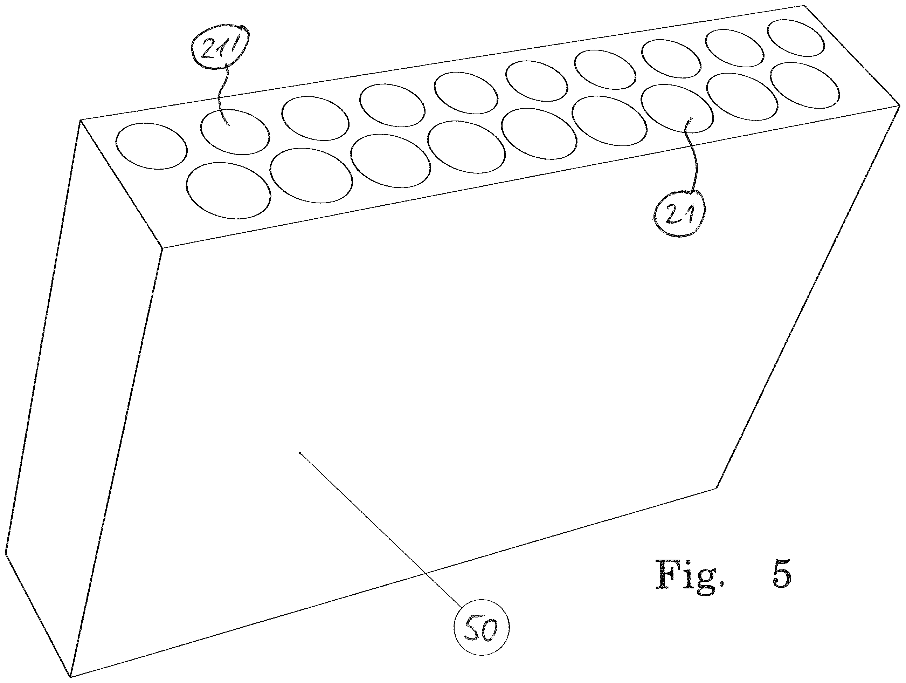

Figur 5 zeigt einen Batterieblock 50, der die Verschaltung mehrerer Einzelzellen beinhaltet. Die Einzelzellen sind so angeordnet, dass die in Figur 5 in der vorderen Reihe dargestellten Einzelzellen von oben nach unten gesehen Innenelektroden aufweisen, deren Querschnittsfläche abnimmt, während die hintere Reihe Einzelzellen 21' aufweist, deren Innenelektroden von oben nach unten einen wachsenden Durchmesser besitzen. Die Einzelzellen sind also angeordnet, dass möglichst viel Platz eingespart werden kann.

Dementsprechend sind diese auch, wie hier dargestellt versetzt auf Lücke angeordnet. Der Batterieblock kann dementsprechend kompakt realisiert werden.

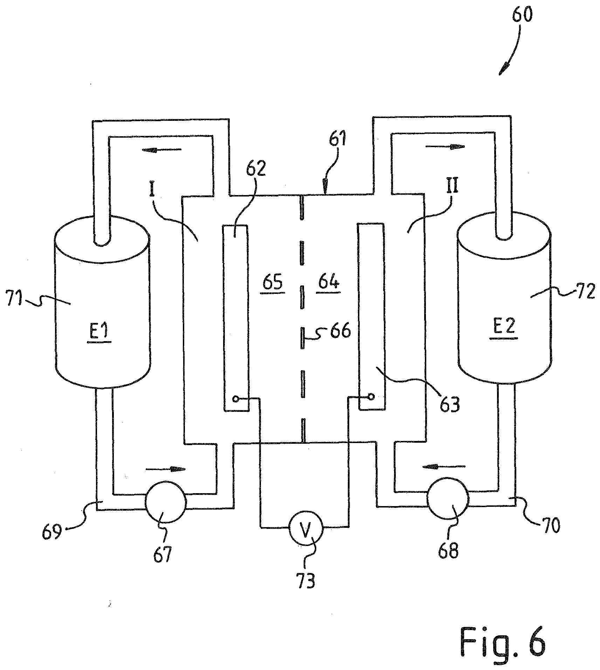

Figur 6 zeigt eine schematische Prinzipdarstellung einer allgemeinen Redox-Flow-Zelle 60 mit einer galvanischen Zelle 61. Diese galvanische Zelle 61 enthält zwei Halbzellen I und II, wobei in jeder der beiden Halbzellen I und II jeweils eine Elektrode 62 beziehungsweise 63 angeordnet ist. Die beiden Halbzellen I und II sind durch eine Membran beziehungsweise einen Separator 66 getrennt, welcher einen Austausch positiver Ionen ermöglicht. Im Fall der galvanischen Zelle gemäß der Erfindung sind in den Zwischenbereichen, welche mit den Bezugszeichen 64 und 65 jeweils gekennzeichnet sind, die entsprechenden graphitierten Vliese angeordnet, die einen Durchfluss der Elektrolytlösung oder des Elektrolytgases ermöglichen. Grundsätzlich können bei herkömmlichen Redox-Flow-Zellen, beispielsweise mit plattenförmiger Struktur die Elektroden auch einfach in einem Behälter angeordnet sein, der vom Elektrolyten durchflossen werden kann.

Die graphitierten Vliese, die in den Bereichen 64, 65 angeordnet wären, sind selbst elektrisch leitend und bilden somit zusätzlich noch einen Teil der Elektroden. Sie übernehmen also eine Doppelfunktion, nämlich die elektrische Leitung beziehungsweise den Ort der chemischen Redox-Prozesse und die Führung des Elektrolyten. Damit die galvanische Zelle durchflossen werden kann, sind Leitungen 69, 70 mit Pumpen 67, 68 vorhanden, welche die Elektrolytlösung E1 und E2 jeweils aus den Tanks 71, 72 in die galvanische Zelle 61 und wieder zurück pumpen. Die an den Elektroden 62, 63 anliegende Spannung kann über das Voltmeter 73 gemessen werden. Wenn die Redox-Flow-Batterie 60 unter Last steht, ist anstelle des Voltmeters 73 ein Verbraucher angeordnet.

Allen Ausführungsbeispielen und Weiterbildungen der Erfindung ist gemeinsam, dass zu jeder festen Teilelektrode ein weicher Spacer aus einem flexiblen weichen Material vorgesehen ist, der zwischen den sich überlappenden festen Teilelektroden angeordnet ist, und wobei die festen Teilelektroden wie folgt ausgebildet sind: die Innenquerschnittsfläche der als Hohlstruktur ausgebildeten festen Teilelektrode verändert sich entlang der Länge der Hohlstruktur monoton in ihrer Größe und/oder die andere der beiden festen Teilelektroden ist so ausgebildet, dass sich die von der Außenkontur der Teilelektrode begrenzte Querschnittsfläche, die senkrecht zur Längsachse verläuft, monoton entlang der Längsachse in ihrer Größe verändert.

### Bezugszeichenliste:

- 1: galvanische Zelle
- 2: Außenelektrode
- 3: Innenelektrode
- 4: graphitiertes Vlies
- 5: graphitiertes Vlies
- 6: Separator / Membran
- 7: Sacklochbohrung
- 8: Stutzen
- 9: radiale Bohrung
- 10: Stutzen
- 11: Kontaktelektrode der Außenelektrode
- 12: Kontaktelektrode der Innenelektrode
- 13: Vergussmasse

- 20: Verschaltung von Einzelzellen
- 21: Einzelzelle
- 22: Außenelektrode
- 22': Kontaktblech
- 23: Innenelektrode
- 24: graphitiertes Vlies
- 25: graphitiertes Vlies
- 26: Separator
- 27: Kontaktelektrode (zur Innenelektrode)
- 28: Vergussmasse
- 29: Fassung
- 30: Strömungskanal für innere Halbzelle
- 31: Stutzen
- 32: Sacklochbohrung
- 33: radiale Bohrung
- 34: Stutzen
- 35: Abdeckung
- 36: Strömungskanal für äußere Halbzelle

- 40: Batterie
- 41: Isolierplatte

- 50: Batterieblock

- 60: Redox-Flow-Zelle
- 61: galvanische Zelle
- 62: Elektrode
- 63: Elektrode
- 64: Zwischenbereich (für graphitiertes Vlies)
- 65: Zwischenbereich (für graphitiertes Vlies)
- 66: Membran/Separator
- 67: Pumpe
- 68: Pumpe
- 69: Leitung
- 70: Leitung
- 71: Tank
- 72: Tank
- 73: Voltmeter

- I: Halbzelle
- II: Halbzelle

- E1: Elektrolyt
- E2: Elektrolyt

- L: Längsachse

## Patentansprüche

1. Galvanische Zelle (1; 21), um eine Redoxreaktion für eine Redox-Flow-Zelle (60) ablaufen zu lassen, umfassend: eine erste und eine zweite Halbzelle (I, II), um jeweils die Reduktion bzw. Oxidation darin ablaufen zu lassen, wobei jede der beiden Halbzellen jeweils eine Elektrode als Anode bzw. Kathode sowie zur Leitung von Elektronen umfasst, wobei die Elektroden jeweils eine feste Teilelektrode (2, 3; 22, 23) aus einem Festkörper umfassen, wobei wenigstens eine der beiden festen Teilelektroden als röhrenartige Hohlstruktur ausgebildet ist, deren Innenquerschnittsfläche senkrecht zur Längsachse (L) der Hohlstruktur verläuft und im Inneren der Hohlstruktur liegt, und wobei die als Hohlstruktur ausgebildete feste Teilelektrode die jeweils andere feste Teilelektrode entlang der Längsausrichtung wenigstens teilweise umschließt, wobei zu jeder festen Teilelektrode ein weicher Spacer (4, 5; 24, 25) aus einem flexiblen weichen Material vorgesehen ist, der zwischen den sich überlappenden festen Teilelektroden angeordnet ist, **dadurch gekennzeichnet, dass** die festen Teilelektroden wie folgt ausgebildet sind: die Innenquerschnittsfläche der als Hohlstruktur ausgebildeten festen Teilelektrode verändert sich entlang der Länge der Hohlstruktur monoton in ihrer Größe und/oder die andere der beiden festen Teilelektroden ist so ausgebildet, dass sich die von der Außenkontur der Teilelektrode begrenzte Querschnittsfläche, die senkrecht zur Längsachse verläuft, monoton entlang der Längsachse in ihrer Größe verändert.

2. Galvanische Zelle nach einem der vorgenannten Ansprüche, **dadurch gekennzeichnet, dass** die andere, nicht als Hohlstruktur ausgebildete feste Teilelektrode wenigstens teilweise als Vollkörper (3; 23) ausgebildet ist.

3. Galvanische Zelle nach einem der vorgenannten Ansprüche, **dadurch gekennzeichnet, dass** im Querschnitt senkrecht zur Längsachse wenigstens eine der festen Teilelektroden (2, 3; 22, 23) innen und/oder außen eine der folgenden Konturformen aufweist: ein Polygon, eine Ellipse, einen Kreis.

4. Galvanische Zelle nach einem der vorgenannten Ansprüche, **dadurch gekennzeichnet, dass** die Innenquerschnittsfläche und/oder die von der Außenkontur begrenzte Querschnittsfläche senkrecht zur Längsachse bei wenigstens einer der beiden festen Teilelektroden (2, 3; 22, 23) streng monoton entlang der Längsachse (L) zunimmt, insbesondere linear oder quadratisch.

5. Galvanische Zelle nach einem der vorgenannten Ansprüche, **dadurch gekennzeichnet, dass** die festen Teilelektroden (2, 3; 22, 23) in Bezug auf ihre Mittenachsen, die entlang der Länge der Teilelektroden verlaufen, koaxial zueinander angeordnet sind.

6. Galvanische Zelle nach einem der vorgenannten Ansprüche, **dadurch gekennzeichnet, dass** die beiden festen Teilelektroden (2, 3; 22, 23) so zu einander angeordnet sind, dass in der gleichen Richtung entlang ihrer Länge die Innenquerschnittsfläche der einen der beiden Teilelektroden zunimmt und von der Außenkontur begrenzte Querschnittsfläche der anderen Teilelektrode abnimmt.

7. Galvanische Zelle nach einem der vorgenannten Ansprüche, **dadurch gekennzeichnet, dass** wenigstens eine der als Hohlstruktur ausgebildeten festen Teilelektroden (2; 22) innen oder außen zylindrisch mit konstantem Kreisdurchmesser entlang der Länge ausgebildet ist.

8. Galvanische Zelle nach einem der vorgenannten Ansprüche, **dadurch gekennzeichnet, dass** die einander zugewandten Seiten der festen Teilelektroden (2, 3; 22, 23) gegenüber der Orientierung der Längsachse jeweils einen konstanten Winkel bilden und die beiden Winkel im Betrag übereinstimmen.

9. Galvanische Zelle nach einem der vorgenannten Ansprüche, **dadurch gekennzeichnet, dass** wenigstens einer der weichen Spacer (4, 5; 24, 25) ein mit Leitungskanälen versehenes Material, insbesondere ein poröses Material, das von einem Fluid durchflossen werden kann, umfasst.

10. Galvanische Zelle nach einem der vorgenannten Ansprüche, **dadurch gekennzeichnet, dass** wenigstens einer der weichen Spacer (4, 5; 24, 25) zugleich als Teilelektrode ausgebildet ist, die insbesondere mit der ihr in derselben Halbzelle zugeordneten festen Teilelektrode in elektrischem Kontakt steht.

11. Galvanische Zelle nach einem der vorgenannten Ansprüche, **dadurch gekennzeichnet, dass** wenigstens einer der weichen Spacer (4, 5; 24, 25) als graphitiertes Vlies ausgebildet ist.

12. Galvanische Zelle nach einem der vorgenannten Ansprüche, **dadurch gekennzeichnet, dass** wenigstens eine der festen Teilelektroden (2, 3; 22, 23) als Graphitkörper ausgebildet ist.

13. Galvanische Zelle nach einem der vorgenannten Ansprüche, **dadurch gekennzeichnet, dass** ein Separator (6; 26) zur Trennung der ersten und zweiten Halbzelle (I, II) vorgesehen ist, wobei der Separator dazu ausgebildet ist, einen Ionenaustausch zwischen den Halbzellen zu ermöglichen, und wobei der Separator insbesondere als Membran ausgebildet ist.

14. Redox-Flow-Zelle (60), umfassend eine galvanische Zelle (1; 21) nach einem der vorgenannten Ansprüche.

## Claims

1. Galvanic cell (1; 21) allowing a redox reaction for a redox flow cell (60) to take place, comprising: first and second half-cells (I, II) respectively allowing reduction or oxidation to take place therein, wherein each of the two half cells comprises an electrode as an anode or cathode as well as a guide for electrons, wherein the electrodes each comprise a solid part electrode (2, 3; 22, 23) of a solid body, wherein at least one of the two solid part electrodes is formed as a pipe-shaped hollow structure whose inner cross-sectional surface extends perpendicular to the longitudinal axis (L) of the hollow structure and lies inside the hollow structure, and wherein the solid part electrode that is in the form of a hollow structure, at least partially surrounds the respective other solid part electrode in the longitudinal direction, wherein a soft spacer (4, 5; 24, 25) of a flexible soft material is provided at each solid part electrode, and is arranged between the overlapping solid part electrodes,
**characterized in that**
the solid part electrodes are designed as follows: the inner cross-sectional surface of the solid part electrode, which is designed as a hollow structure, changes monotonically in size along the length of the hollow structure, and/or the other of the two solid part electrodes is so designed that the cross-sectional surface delimited by the outer contour of the part electrode and extending perpendicular to the longitudinal axis, changes monotonically in size along the longitudinal axis.

2. Galvanic cell according to one of the preceding claims,
**characterized in that**
the other solid part electrode that is not designed as a hollow structure, is designed at least partially as a solid body (3; 23).

3. Galvanic cell according to one of the preceding claims,
**characterized in that**
in the cross-section perpendicular to the longitudinal axis, at least one of the solid part electrodes (2, 3; 22, 23) comprises one or more of the following contour shapes: a polygon, an ellipse, a circle.

4. Galvanic cell according to one of the preceding claims,
**characterized in that**
the inner cross-sectional area and/or the cross-sectional surface delimited by the outer contour is/are perpendicular to the longitudinal axis (L) in the case of at least one of the solid part electrodes (2, 3; 22, 23) increases strongly monotonically, in particular linear or quadratic.

5. Galvanic cell according to one of the preceding claims,
**characterized in that**
the solid part electrodes (2, 3; 22, 23) are arranged coaxially to one another with respect to their center axes, which extend along the length of the part electrodes.

6. Galvanic cell according to one of the preceding claims,
**characterized in that**
the two solid part electrodes (2, 3; 22, 23) are so arranged with respect to one another that the inner cross-sectional surface of one of the two part electrodes increases, while the cross-sectional area of the other part electrode that is delimited by the outer contour decreases, in the same direction along their length.

7. Galvanic cell according to one of the preceding claims,
**characterized in that**
at least one of the solid part electrodes (2; 22) that is designed as a hollow structure, is formed cylindrically internally or externally with a constant circular diameter along its length.

8. Galvanic cell according to one of the preceding claims,
**characterized in that**
the sides of the solid part electrodes (2, 3; 22, 23) facing one another respectively form a constant angle with respect to the orientation of the longitudinal axis, and the two angles correspond in magnitude.

9. Galvanic cell according to one of the preceding claims,
**characterized in that**
at least one of the soft spacers (4, 5; 24, 25) comprises a material provided with guide channels, in particular a porous material through which a fluid may flow.

10. Galvanic cell according to one of the preceding claims,
**characterized in that**
at least one of the soft spacers (4, 5; 24, 25) is at the same time in the form of a part electrode that is, in particular, electrically in contact with the solid part electrode assigned to it in the same half cell.

11. Galvanic cell according to one of the preceding claims,
**characterized in that**
at least one of the soft spacers (4, 5; 24, 25) is designed as a graphitized nonwoven.

12. Galvanic cell according to one of the preceding claims,
**characterized in that**
at least one of the solid part electrodes (2, 3; 22, 23) is designed as a graphite body.

13. Galvanic cell according to one of the preceding claims,
**characterized in that**
a separator (6; 26) is provided to separate the first and second half-cells (I, II), wherein the separator is designed to allow ion exchange between the half-cells, and wherein the separator is designed, in particular, as a membrane.

14. Redox flow cell (60) comprising a galvanic cell (1; 21) according to one of the preceding claims.

## Revendications

1. Cellule galvanique (1 ; 21) permettant le déroulement d'une réaction redox pour une cellule à flux redox (60), comprenant : une première et une deuxième demie-cellule (I, II) permettant chacune le déroulement d'une réduction ou d'une oxydation, chacune des deux demie-cellules comprenant une électrode en tant qu'anode ou cathode pour la conduction d'électrons, les électrodes comprenant chacune une électrode partielle fixe (2, 3 ; 22, 23) constituée d'un corps solide, au moins une des deux électrodes partielles fixes étant conçue comme une structure tubulaire creuse dont la surface de section interne s'étend perpendiculairement à l'axe longitudinal (L) de la structure creuse et se trouve à l'intérieur de la structure creuse et l'électrode partielle fixe conçue comme une structure creuse entourant au moins partiellement l'autre électrode partielle fixe le long de la direction longitudinale, moyennant quoi, sur chaque électrode partielle fixe, est prévue une entretoise souple (4, 5 ; 24, 25) constituée d'un matériau souple flexible, qui se trouve entre les électrodes partielles fixes superposées,
**caractérisée en ce que**
les électrodes partielles fixes sont conçues comme suit : la surface de section interne de l'électrode partielle fixe conçue comme une structure creuse varie le long de la longueur de la structure creuse de manière monotone en ce qui concerne sa taille et/ou l'autre des deux électrodes partielles fixes est conçue de façon à ce que la surface de section délimitée par le contour externe de l'électrode partielle, qui s'étend perpendiculairement à l'axe longitudinal, varie de manière monotone le long de l'axe longitudinal en ce qui concerne sa taille.

2. Cellule galvanique selon l'une des revendications précédentes, **caractérisée en ce que** l'autre électrode partielle fixe, non conçue comme une structure creuse, est conçue au moins partiellement comme un corps plein (3 ; 23).

3. Cellule galvanique selon l'une des revendications précédentes, **caractérisée en ce que**, en section perpendiculairement à l'axe longitudinal, au moins une des électrodes partielles fixes (2, 3 ; 22, 23) présente, à l'intérieur et/ou à l'extérieur, une des formes de contours suivantes : un polygone, une ellipse, un cercle.

4. Cellule galvanique selon l'une des revendications précédentes, **caractérisée en ce que** la surface de section interne et/ou la surface de section délimitée par le contour externe perpendiculaire à l'axe longitudinal pour au moins une des deux électrodes partielles fixes (2, 3 ; 22, 23) augmente de manière strictement monotone le long de l'axe longitudinal (L), plus particulièrement de manière linéaire ou carrée.

5. Cellule galvanique selon l'une des revendications précédentes, **caractérisée en ce que** les électrodes partielles fixes (2, 3 ; 22, 23) sont disposées coaxialement entre elles par rapport à leurs axes centraux, qui s'étendent le long de la longueur des électrodes partielles.

6. Cellule galvanique selon l'une des revendications précédentes, **caractérisée en ce que** les deux électrodes partielles fixes (2, 3 ; 22, 23) sont disposées l'une par rapport à l'autre de façon à ce que, dans la même direction le long de leur longueur, la surface de section interne d'une des deux électrodes partielles fixes augmente et la surface de section délimitée par le contour externe de l'autre électrode partielle diminue.

7. Cellule galvanique selon l'une des revendications précédentes, **caractérisée en ce qu'**au moins une des électrodes partielles fixes (2 ; 22) conçues comme une structure creuse est conçue, à l'intérieur ou à l'extérieur, de manière cylindrique avec un diamètre de cercle constant le long de la longueur.

8. Cellule galvanique selon l'une des revendications précédentes, **caractérisée en ce que** les côtés, orientés l'un vers l'autre, des électrodes partielles fixes (2, 3 ; 22 23) forment, par rapport à l'orientation de l'axe longitudinal, un angle constant et les deux angles sont égaux par rapport à leurs valeurs absolues.

9. Cellule galvanique selon l'une des revendications précédentes, **caractérisée en ce qu'**au moins une des entretoises souples (4, 5 ; 24, 25) comprend un matériau muni de canaux de conduction, plus particulièrement un matériau poreux qui peut être traversé par un fluide.

10. Cellule galvanique selon l'une des revendications précédentes, **caractérisée en ce qu'**au moins une des entretoises souples (4, 5 ; 24, 25) est conçue également comme une électrode partielle qui est en contact électrique plus particulièrement avec l'électrode partielle fixe qui lui est attribuée dans la même demie-cellule.

11. Cellule galvanique selon l'une des revendications précédentes, **caractérisée en ce qu'**au moins une des entretoises souples (4, 5 ; 24, 25) est conçue comme une toison graphitée.

12. Cellule galvanique selon l'une des revendications précédentes, **caractérisée en ce qu'**au moins une des électrodes partielles fixes (2, 3 ; 22, 23) est conçue comme un corps en graphite.

13. Cellule galvanique selon l'une des revendications précédentes, **caractérisée en ce qu'**un séparateur (6 ; 26) est prévu pour la séparation de la première et de la deuxième demie-cellule (I, I), le séparateur étant conçu pour permettre un échange d'ions entre les demie-cellules et le séparateur étant plus particulièrement conçu comme une membrane.

14. Cellule à flux redox (60), comprenant une cellule galvanique (1 ; 21) selon l'une des revendications précédentes.
